Europäisches Patentamt

European Patent Office

Office européen des brevets

(11) Veröffentlichungsnummer: **0 019 180**
A1

# EUROPÄISCHE PATENTANMELDUNG

(21) Anmeldenummer: 80102428.2

(22) Anmeldetag: 05.05.80

(51) Int. Cl.³: **C 04 B 39/00**
C 04 B 17/00, F 16 S 1/10
B 32 B 5/18

(30) Priorität: 17.05.79 DE 7914322 U

(43) Veröffentlichungstag der Anmeldung:
26.11.80 Patentblatt 80/24

(84) Benannte Vertragsstaaten:
AT BE CH DE FR GB IT LI NL SE

(71) Anmelder: Rheinhold & Mahla GmbH
Carl-Reiss-Platz 7 - 9
D-6800 Mannheim(DE)

(72) Erfinder: Drinkuth, Franz, Ing.-grad.
Grüner Weg 6
D-5068 Odenthal(DE)

(72) Erfinder: Mönig, Dieter, Ing.-grad.
Hirschweg 58
D-5068 Odenthal(DE)

(72) Erfinder: Schröder, Hans-Joachim, Ing.-grad.
Nadlerstrasse 48
D-6800 Manneheim 51(DE)

(74) Vertreter: Bünemann, Gerhard, Dr. et al,
c/o Bayer AG Zentralbereich, Patente Marken und
Lizenzen
D-5090 Leverkusen 1, Bayerwerk(DE)

(54) Verfahren zur Herstellung feuerbeständiger Konstruktionselemente.

(57) Verfahren zur Herstellung von feuerbeständigen Konstruktionselementen, wobei auf eine Deckschicht (1) aus hochfesten Werkstoffen mit niedriger Temperaturbelastbarkeit eine Magnesiumoxichlorid-Schaumschicht (4) aufgetragen wird. Als hochfeste Werkstoffe werden organische Harze und/oder dünne Metallschichten eingesetzt, die bei Temperaturen über ca. 100°C erweichen bzw. schmelzen.

FIG. 1

Rheinhold & Mahla GmbH          Mannheim
                                Je/Scho/W


Verfahren zur Herstellung feuerbeständiger Konstruktionselemente

Feuerbeständige Möbel, Türen, Gehäuse und Klappen mit
den verschiedensten Deckschichten und Isoliermaterialien sind bekannt. Im Möbel- und Gehäusebau werden die meist metallischen Deckschichten
mit Blählacken beschichtet, um möglichst ohne
zusätzliche Isolierstoffe auszukommen. Die mit
den Blählacken erreichten Feuerwiderstandszeiten sind jedoch in den meisten Fällen nicht ausreichend. Damit wird eine zweischalige Bauweise
erforderlich, in der z. B. Mineralwolle, Gipskartonplatten oder asbesthaltige  Platten als
Zwischenlage und damit als Isoliermaterial dienen.
Solche Bauweisen sind z.B. aus der Zulass. Nr.
IfBT 751561  bekannt. Sie besitzen jedoch eine große
Wandstärke der Stahlblechdeckschichten und damit ein
hohes Gewicht. Ferner verzieht sich dieser Aufbau im
Brandfall so stark, daß z.B. die Türen und Klappen im
Brandfall keinen Schutz mehr gewährleisten. Deshalb sind wiederum

RM 426-Ausland

dicke Stahlprofile und komplizierte Zuhaltungen bei Türen bzw. Klappen erforderlich, um die im Brandfall auftretenden Verzugskräfte zu beherrschen. Ein Leichtbau von stabilen und feuerbeständigen Konstruktionselementen,wie z. B. Türen, Klappen, Gehäusen und Aktenschränken war bisher kaum zu realisieren.

Aufgabe der vorliegenden Erfindung war es daher, ein Verfahren zur Herstellung eines leichten, dünnen, feuerbeständigen Sandwich-Aufbaus zu schaffen, der mit geringen materiellen Mitteln serienmäßig in den gewünschten Ausführungsformen herstellbar ist und die Anforderungen bezüglich der geforderten Feuerwiderstandszeit erfüllt.

Die Aufgabe wird dadurch gelöst, daß man auf eine Deckschicht bzw. die Deckschicht-Verbindungen aus hochfesten Werkstoffen mit niedriger Temperaturbelastbarkeit einen Kern als Isolierung, die aus Magnesiumoxidchloridschaum besteht, aufträgt. Zusätzlich kann, um die Tragfähigkeit des Verbundes - Deckschicht zu tragfähigem Isolierschaum zu erhöhen, eine faserige Mineral- oder Chemiefaser-Einlage, z.B. in Netz-, Matten-, Flock-, Gewebe- oder Gewirkeform aufgeklebt werden. Als Kleber wird in einem solchen Fall Wasserglas verwendet. Durch diese Maßnahme wird eine gute Verankerung der Deckschicht mit dem feuerbelastbaren Magnesiumoxichloridschaumkern hergestellt.

RM 426

Gegenstand der vorliegenden Erfindung ist daher ein Verfahren zur Herstellung eines feuerbeständigen Konstruktionselementes, bei dem auf eine Deckschicht aus hochfesten Werkstoffen mit niedriger Temperaturbelastbarkeit eine Magnesiumoxidchloridschaumschicht aufgetragen wird.

Es wurde überraschenderweise gefunden, daß derart aufgebaute Leichtkonstruktionselemente im Brandfall ohne nennenswerte Verzugserscheinungen die gewünschte Feuerwiderstandsdauer erbringen, da die dünnen, hochfesten Deckschichten bzw. die Randverklebungen, welche eine niedrigere Temperaturbelastbarkeit aufweisen, bereits bei niedrigen Brandtemperaturen wegschmelzen bzw. erweichen. Der dahinter liegende Magnesiumoxichloridschaum bewirkt nun die gewünschte Feuerwiderstandsdauer in Abhängigkeit von der Dicke der Schaumschicht. Unter niedrigen Brandtemperaturen werden im vorliegenden Fall ca. 100-300$^{\circ}$C verstanden.

Bei dem doppelschaligen Elementaufbau übernimmt die dem Feuer abgewandte Deckschicht mit dem Magnesiumoxichloridschaum die Statik des Elementes. Ist bei einer Brandschutzkonstruktion, z.B. einem Gehäuse oder einem Aktenschrank etc., die zu erwartende Brandseite bekannt, so ist es empfehlenswert, die dem Feuer abgewandte Deckschicht dicker bzw. aus einem hochfesteren Werk-

RM 426

stoff als die dem Feuer zugewandte Seite zu fertigen. Der Aufbau mit zwei Deckschichten ist daher bevorzugt.

Als Deckschichten werden Polyesterharze, Epoxidharze Polyurethane, Thermoplaste, Phenolharze, Papiere, Pappen, Karton, textile Gebilde und alle spritzfähigen bzw. zu Blechen oder Folien verarbeitbaren Metalle verwendet. Alle Deckschichtwerkstoffe können auch mit Füllstoffen oder Fasern verstärkt sein. Vorzugsweise werden Aluminium bzw. Aluminiumlegierungen als Deckschichtbleche bzw. Folien eingesetzt.

Der für die Zwischenschicht benötigte Magnesiumoxichloridschaum wird in bekannter Weise durch Vermischen von Magnesiumchlorid, Magnesiumoxid bzw. gebranntem Magnesit, Wasser, Netzmitteln und gegebenenfalls Zusatzmitteln hergestellt und dieses Gemisch durch Verschäumer, z. B. Wasserstoffperoxid und gegebenenfalls Katalysatoren verschäumt.

Vorzugsweise enthält der Magnesiumoxichloridschaum feinteilige Glasfaser, die auf den Schaum sogar noch verfestigend wirkt und im Brandfall eine Rissebildung verhindert.

Für den Brandschutz ist es unerheblich, welche Form das Konstruktionsteil aufweist, wichtig ist nur, daß die eingesetzte Magnesiumoxichloridschaumschicht eine ausreichende Dicke aufweist, um im Brandfall die er- wünschte Feuerwiderstandszeit zu besitzen.

- 5 -

Der Aufbau der erfindungsgemäßen feuerbeständigen
Konstruktionselemente mit der Magnesiumoxichloridschaumschicht als Isoliereinlage ermöglicht es,
Elemente mit geringen Wandstärken und damit geringem Gewicht in einfacher Weise herzustellen.

Die vorliegende Erfindung soll durch die folgenden
Beispiele noch weiter erläutert werden:

RM 426

- 6 -

Beispiel 1

In eine geprägte oder tiefgezogene Folie oder Blechhaut (1), die mit einem Verankerungsvlies (2) ausgestattet sein kann, wird der Magnesiumoxichloridschaum (4) eingebracht. Im Magnesiumoxichloridschaum kann auch ein Verstärkungsrahmen (3), an dem Beschläge befestigt werden können, eingebettet sein. Die Deckschicht (5) wird nach dem Eintrag des Schaumes auf die Haut (1) gelegt und im Randbereich durch Börteln (6) Nieten oder Schrauben (7) bzw. Kleben (8) verbunden. Diese Randverklebung kann so eingestellt sein, daß sie gleichzeitig mit dem Erweichen, bzw. Durchbrennen der Deckschichten zerstört wird. Der Schaum (4) kann jedoch auch in flüssigem Zustand zwischen die beiden verbundenen Deckschichten (1/5) eingetragen werden.

Beispiel 2

Ein vorgefertigtes Magnesiumoxichloridschaum-Formteil wird als Stempel benutzt, um die plastifizierte Thermoplast-Deckschicht (10) zu formen. Zur Verbesserung der Verbindung Deckschicht (10/13) zum Schaum (9) kann zusätzlich ein Schmelzkleber (11) verwendet werden. Die Deckschicht (9/10) wird im Randbereich (12) durch Kleben, Schweißen oder Schrauben analog Beispiel 1 verbunden.

RM 426

## Beispiel 3

Auf ein vorgefertigtes Magnesiumoxichloridschaum-Formteil (14), das bereits Metallverstärkungen (15) besitzen kann, wird die Deckschicht (16) durch ein Spritzverfahren mit einer Pistole o. ä. (17) aufgetragen. Als spritzfähige Deckschichten wurden Reaktionsharze, Thermoplaste bzw. Metalle (Metallspritz-Verfahren) verwendet.

## Beispiel 4

Von einer Rolle wird das Deckschichtmaterial abgezogen und zu einem Hutprofil geformt. Das Magnesiumoxichloridschaum-Gemisch kann nach dem Falten auf die Deckschicht-Folie aufgetragen werden und wird anschließend durch einen Rakel geglättet. Auf die so geglättete Oberfläche wird nun von einer zweiten Rolle die Deckschicht durch die Anpreßrolle aufgezogen und mit der Deckschicht verklebt bzw. gefalzt. Eine nachgeschaltete Heizstrecke bewirkt kürzere Aushärtezeiten des Schaumes. Die Deckschichten können sich vom Material und von der Dicke her unterscheiden.

RM 426

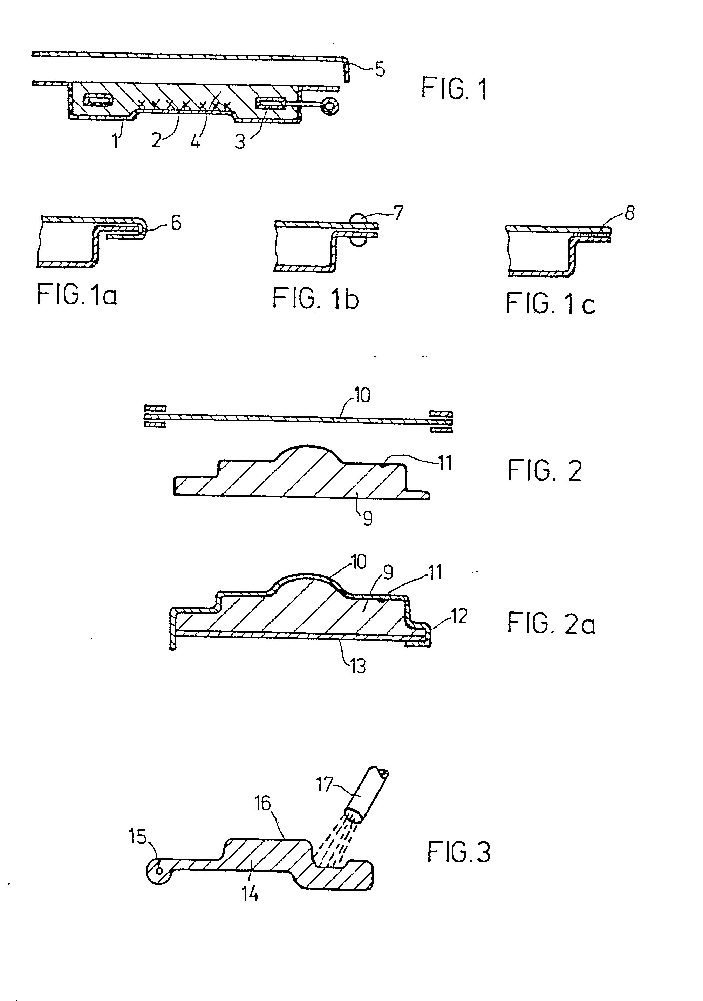

Patentansprüche:

1) Verfahren zur Herstellung feuerbeständiger Konstruktionselemente, dadurch gekennzeichnet, daß man auf eine Deckschicht aus hochfesten Werkstoffen mit niedriger Temperaturbelastbarkeit eine Magnesiumoxidchloridschaumschicht aufträgt.

2) Verfahren nach Anspruch 1, dadurch gekennzeichnet, daß als hochfeste Werkstoffe organische Harze und/oder dünne Metallschichten eingesetzt werden, die bei Temperaturen über ca. 100°C erweichen bzw. schmelzen.

3) Verfahren nach Anspruch 1 oder 2, dadurch gekennzeichnet, daß in die Magnesiumoxidchloridschaumschicht feinteilige Glasfaser eingebracht wird.

4) Verfahren nach einem oder mehreren der Ansprüche 1 bis 3, dadurch gekennzeichnet, daß die Deckschicht bzw. Deckschichten mit der Magnesiumoxidchloridschaumschicht über aufgeklebte mineralische Faser- bzw. Chemiefasermatten verbunden werden.

RM 426

FIG. 1

FIG. 1a

FIG. 1b

FIG. 1c

FIG. 2

FIG. 2a

FIG. 3

0019180

### Europäisches Patentamt

## EUROPÄISCHER RECHERCHENBERICHT

Nummer der Anmeldung
EP 80 10 2428

### EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | GB - A - 1 339 275 (BLOUNT BROTHERS) <br> * Seite 1, Zeilen 12-15; Seiten 6,7; Ansprüche 1,7,14,15,19 * <br> -- | 1-3 |
| X | FR - A - 1 570 781 (MEARL CORP.) <br> * Seite 1, Zeilen 1-5; Seite 2, Zeilen 5-8, 36-42; Seite 3, Zeilen 33-36 * <br> -- | 1-3 |
| XE <br> P | GB - A - 1 561 271 (STEETLEY MINERALS) <br> * Seiten 2,3; Ansprüche 1,4,5, 7 * <br> -- | 1-3 |
| | US - A - 3 778 304 (H.C. THOMPSON) <br> * Spalte 2, Zeilen 36-45; Spalte 6, Zeilen 44-55; Spalten 6,7; Beispiele 1,4 * <br> -- | 1-3 |
| EP | EP - A - 0 006 815 (J.M. PASCAU) <br> * Zusammenfassung; Beispiel 1 * <br> -- | 1,2,4 |
| A | US - A - 1 761 461 (H. APEL) | |
| A | FR - A - 2 330 514 (J.H. VELDHOEN) <br> ----- | |

**KLASSIFIKATION DER ANMELDUNG (Int. Cl. 3)**

C 04 B 39/00
          17/00
F 16 S   1/10
B 32 B   5/18

**RECHERCHIERTE SACHGEBIETE (Int. Cl. 3)**

C 04 B 39/00
          17/00
B 28 B 19/00
F 16 S   1/00

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 18-08-1980 | DAELEMAN |

EPA form 1503.1   06.78